(19) Europäisches Patentamt / European Patent Office / Office européen des brevets

(11) **EP 3 608 587 A1**

(12) **EUROPEAN PATENT APPLICATION**

(43) Date of publication:
**12.02.2020 Bulletin 2020/07**

(51) Int Cl.:
**F21S 43/251** (2018.01)     **F21S 43/237** (2018.01)
**F21S 43/27** (2018.01)      **B60Q 1/00** (2006.01)

(21) Application number: **19189364.3**

(22) Date of filing: **31.07.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **06.08.2018 JP 2018147455** | (71) Applicant: **Mazda Motor Corporation**<br>**Aki-gun, Hiroshima 730-8670 (JP)**<br><br>(72) Inventor: **NAKAYA, Yoshiaki**<br>**730-8670 Hiroshima (JP)**<br><br>(74) Representative: **Herrmann, Uwe**<br>**Lorenz Seidler Gossel**<br>**Rechtsanwälte Patentanwälte**<br>**Partnerschaft mbB**<br>**Widenmayerstraße 23**<br>**80538 München (DE)** |

(54) **VEHICULAR ILLUMINATION DEVICE**

(57)     Provided is a vehicular illumination device (2) capable of protecting a second light source portion (8) from moisture and dust, and achieving enhanced design, while outputting light on the outside of a housing (18). The illumination device (2) is provided on a front portion of a vehicle (1). The illumination device (2) includes an outer glass (13), a headlight (5) accommodated inside the housing (18) including the outer glass (13), a second light source portion (8) and a first light guide (9) accommodated inside the housing (18), and a second light guide (10) disposed outside the housing (18). An end surface (9a) of the first light guide (9), and an end surface (10a) of the second light guide (10) are disposed to face each other via an interposing portion (13a) of the outer glass (13) interposed between these end surface portions (9a,10a). At least a part of light output from the second light source portion (8) is incident from the first light guide (9) to the second light guide (10) through the interposing portion (13a).

FIG.4

EP 3 608 587 A1

## FIG.5

## Description

### Field of the Invention

The present invention relates to a vehicular illumination device, and more particularly relates to an illumination device provided on a front portion of a vehicle, and including a headlight and a light emitting portion mounted on the headlight.

### Description of Related Art

In a vehicle such as an automobile, a headlight is disposed on a front portion of the vehicle. In recent years, a vehicle in which a plurality of light emitting portions are mounted on a headlight has been developed.

For example, Japanese Unexamined Patent Application Publication No. 2018-32512 discloses an illumination device in which a daytime running light is provided as a light emitting portion mounted on a headlight is disposed inside a housing for accommodating the headlight. In the illumination device disclosed in Japanese Unexamined Patent Application Publication No. 2018-32512, a rod-shaped light guide (a light guiding member) and a light source (an LED light source) included in each of daytime running lights are accommodated inside a housing, and the light guide is configured to emit light inside the housing, while guiding light emitted from the light source.

In a vehicle such as an automobile, enhanced design is also demanded for an illumination device. In the technique disclosed in Japanese Unexamined Patent Application Publication No. 2018-32512, it may be difficult to satisfy such a demand. Specifically, in the technique disclosed in Japanese Unexamined Patent Application Publication No. 2018-32512, a light source is accommodated inside a housing in order to protect the light source from moisture and dust. Further, a light guide for outputting light is also accommodated inside the housing. Therefore, it may be difficult to implement a configuration such that light is output on the outside of a housing in order to achieve enhanced design.

However, in a vehicle such as an automobile, since a light emitting portion mounted on a headlight is also disposed on a front portion of the vehicle, it is also important to protect a light source portion from moisture and dust.

An object of the present invention is to provide a vehicular illumination device which enables to protect a light source portion from moisture and dust, and enables to achieve enhanced design, while outputting light on the outside of a housing.

### Summary of the Invention

A vehicular illumination device according to the present invention is a vehicular illumination device provided on a front portion of a vehicle. The illumination device includes: a housing having a light transmitting portion disposed in a partial area including the front portion of the vehicle and capable of transmitting light from inside of the housing to outside thereof; a headlight accommodated inside the housing, and serving as a first light source portion capable of radiating light forwardly of the vehicle through the light transmitting portion; a second light source portion accommodated inside the housing separately of the headlight; a first light guide disposed inside the housing, and configured to allow incidence of light output from the second light source portion and guide at least a part of the incident light to the light transmitting portion; and a second light guide disposed outside the housing, and configured to allow incidence of the light guided by the first light guide via the light transmitting portion, and output the incident light forwardly of the vehicle, while guiding the incident light.

### Brief Description of the Drawings

FIG. 1 is a schematic front view illustrating a configuration of a front portion of a vehicle according to an embodiment.
FIG. 2 is a schematic front view illustrating a layout relationship between an illumination device and a signature wing.
FIG. 3 is a schematic diagram schematically and enlargedly illustrating a portion A in FIG. 2.
FIG. 4 is a diagram illustrating a IV-IV section in FIG. 2, and is a schematic cross-sectional view illustrating an internal configuration of the illumination device.
FIG. 5 is a schematic cross-sectional view enlargedly illustrating a portion B in FIG. 4.
FIG. 6 is a schematic front view illustrating configuration of a light guide disposed to surround a periphery of a headlight, and another light guide connected to the light guide.
FIG. 7 is a schematic cross-sectional view illustrating a light path inside a perimeter portion of an outer glass.
FIG. 8 is a schematic plan view illustrating a configuration of a light guide disposed along a front end portion of the signature wing.

FIG. 9A is a schematic cross-sectional view illustrating a configuration of an outer glass according to a first modification.

FIG. 9B is a schematic cross-sectional view illustrating a configuration of an outer glass according to a second modification.

FIG. 9C is a schematic cross-sectional view illustrating a configuration of an outer glass according to a third modification.

**Detailed Description of the Embodiment**

In the following, an embodiment of the present invention is described with reference to the drawings. Note that an embodiment described in the following is an example of the present invention. The present invention is not limited to the following embodiment except for an essential configuration thereof.

Note that, in the drawings to be referred to in the following description, "FR" denotes a front side of a vehicle (a traveling direction), "RE" denotes a rear side of the vehicle, "LE" denotes a left side of the vehicle, "RI" denotes a right side of the vehicle, "UP" denotes an upper side of the vehicle, and "LO" denotes a lower side of the vehicle.

[Embodiment]

1. Configuration of Vehicular Front Portion 1a

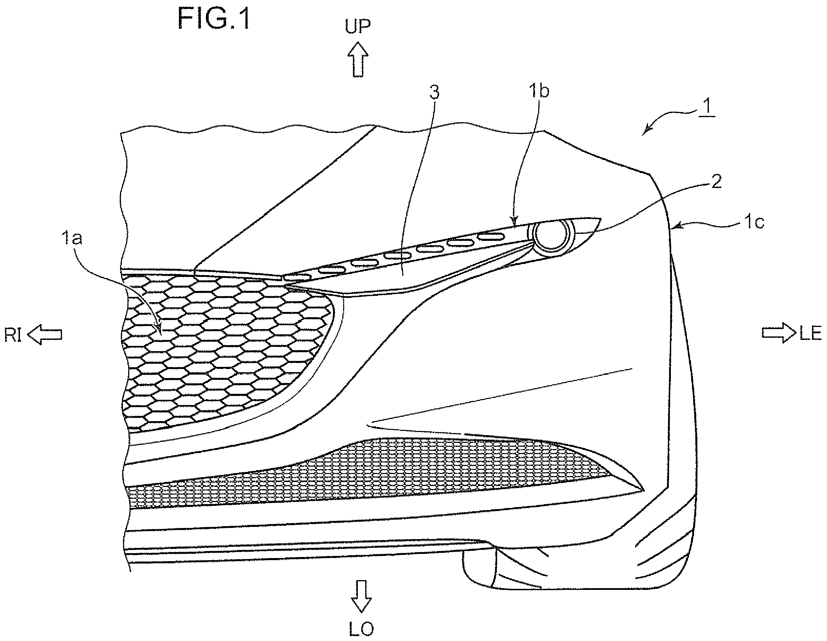

A configuration of a vehicular front portion 1a of a vehicle 1 according to an embodiment is described with reference to FIG. 1.

As illustrated in FIG. 1, a recess portion 1b recessed rearwardly of the vehicle 1 is formed in an end portion (in FIG. 1, a left side portion) of the vehicular front portion 1a of the vehicle 1 in a vehicle width direction. The recess portion 1b has an elongated shape in a lateral direction from a middle portion of the vehicle 1 in the vehicle width direction toward a vehicular side portion 1c in a front view when viewed from the front side of the vehicle 1.

An illumination device 2 and a signature wing (a registered trademark of Mazda Motor Corporation) 3 are disposed in a rear portion of the recess portion 1b (a portion on the rear side on the plane of FIG. 1).

The signature wing 3 is an exterior member (a garnish) for decorating the vehicular front portion 1a of the vehicle 1. The signature wing 3 exhibits a high decorative effect not only in a daytime but also in a nighttime by causing a wing light emitting portion 4 to be described later and incorporated in the signature wing 3 to emit light.

The signature wing 3 includes a plate-shaped wing portion extending in a vehicle width direction with a small width along the recess portion 1b. Further, the signature wing 3 is formed to extend from the rear side of the recess portion 1b outwardly (forwardly of the vehicle 1).

2. Layout Configuration of Illumination Device 2 and Signature Wing 3

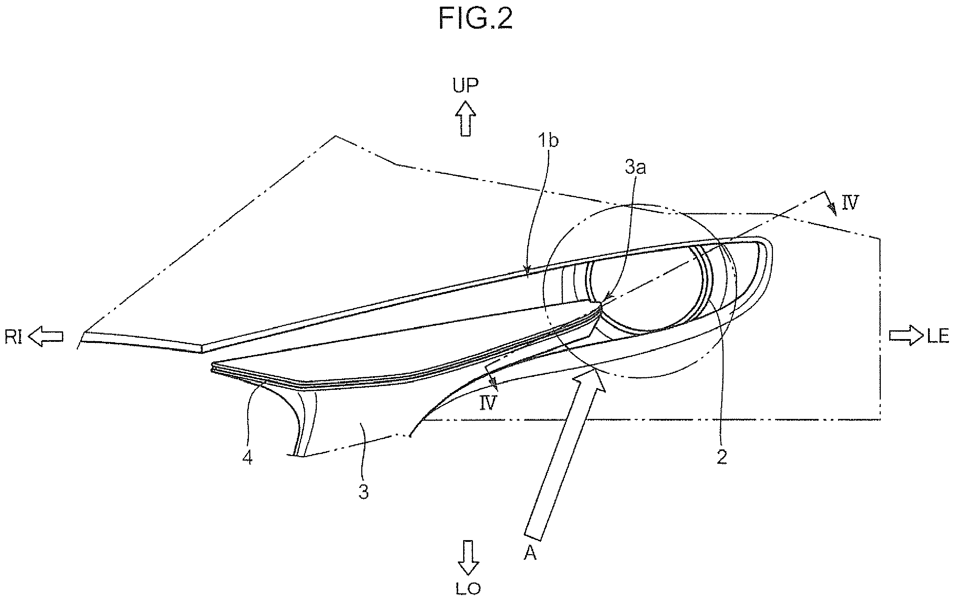

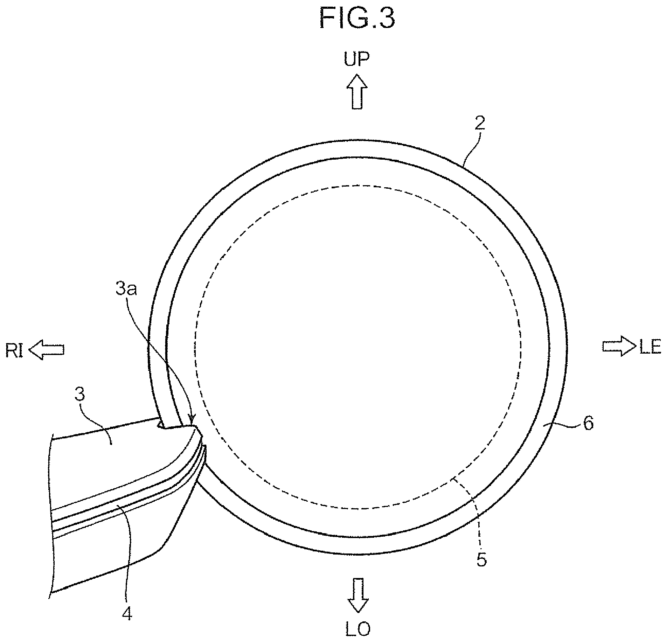

A layout configuration of the illumination device 2 and the signature wing 3 is described with reference to FIGS. 2 and 3. FIG. 2 is a schematic front view illustrating a layout configuration of the illumination device 2 and the signature wing 3. FIG. 3 is a schematic diagram schematically and enlargedly illustrating a portion A in FIG. 2.

As illustrated in FIG. 3, the illumination device 2 according to the present embodiment includes a headlight 5, an annular light emitting portion 6, and the wing light emitting portion 4. Further, as illustrated in FIGS. 2 and 3, a part of a circumference of the annular light emitting portion 6 is covered by a distal end portion 3a of the signature wing 3 from the front side.

The headlight 5 has a substantially circular shape in a front view as an external appearance. The annular light emitting portion 6 is formed into an annular shape in such a way as to surround an outer circumference of the headlight 5 in a front view.

On the other hand, the wing light emitting portion 4 is formed along a front end portion (a peak portion protruding most forwardly of the vehicle 1) of the signature wing 3.

Note that each of the annular light emitting portion 6 and the wing light emitting portion 4 in the present embodiment corresponds to a light emitting portion mounted on the headlight 5.

3. Internal Configuration of Illumination Device 2

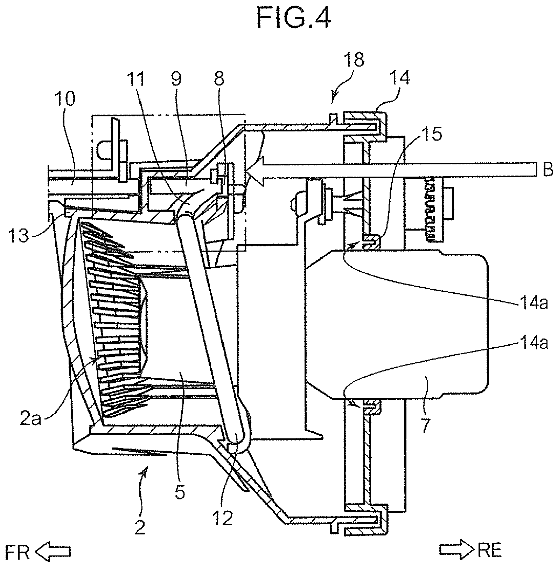

An internal configuration of the illumination device 2 is described with reference to FIG. 4. FIG. 4 is a schematic cross-sectional view illustrating a IV-IV section in FIG. 2.

As illustrated in FIG. 4, the illumination device 2 includes the headlight 5 serving as a first light source portion inside a light chamber 2a. A heat sink 7 for releasing heat generated when the headlight 5 is turned on to the outside is provided on a rear portion of the headlight 5. A part of the heat sink 7 extends rearwardly from the light chamber 2a.

The light chamber 2a is formed inside a housing 18, which is constituted by combining an outer glass 13 and a back surface case 14. The outer glass 13 is formed in such a way as to surround a front surface and a perimeter of the headlight 5. Note that the outer glass 13 may be a transparent or semi-transparent member, and is not limited to a member made of glass. Therefore, the outer glass 13 may be made of plastic.

Note that the heat sink 7 extends rearwardly of the housing 18 through an opening portion 14a of the back surface case 14. Further, a clearance between the back surface case 14 and the heat sink 7 is sealed by an elastically deformable seal member 15.

An annular-shaped light guide 12 is also disposed inside the light chamber 2a in such a way as to surround an outer circumference of the headlight 5. The light guide 12 corresponds to a third light guide.

Further, a second light source portion 8 constituted by one or more semiconductor light emitting elements (e.g., LED chips), as a light source portion separately of the headlight 5 serving as a first light source portion, a linearly and forwardly extending light guide 9 disposed in contact with or proximity to the second light source portion 8, and a light guide 11 for connecting the light guide 9 and the light guide 12 are also disposed inside the light chamber 2a. The light guide 9 corresponds to a first light guide, and the light guide 11 corresponds to a fourth light guide.

When the second light source portion 8 is driven to emit light, light output from the second light source portion 8 is guided to the light guides 9 and 11, and is incident to the light guide 12. The light guide 12 outputs the incident light forwardly, while guiding the incident light in a circumferential direction. Specifically, in the illumination device 2, the annular light emitting portion 6 is constituted by the light guide 12.

4. Layout Relationship between Light Guide 9 and Light Guide 10

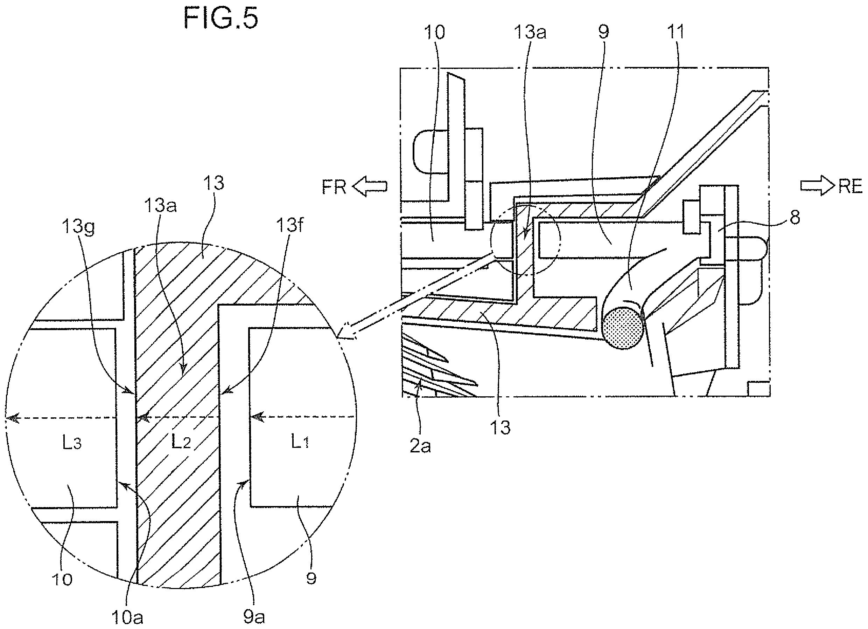

A layout relationship between the light guide 9 and the light guide 10 is described with reference to FIG. 5. FIG. 5 is a schematic cross-sectional view enlargedly illustrating a portion B in FIG. 4.

As illustrated in FIG. 5, in the illumination device 2, the light guide 9 disposed inside the light chamber 2a, and the light guide 10 disposed outside the light chamber 2a (outside the housing 18) face each other in a state that a part of the outer glass 13 (an interposing portion 13a) is interposed between the light guides 9 and 10.

Specifically, as illustrated by an enlarged portion in FIG. 5, an end surface portion 9a of the light guide 9 faces an end surface portion 10a of the light guide 10 in a state that the interposing portion 13a of the outer glass 13 is interposed between the end surface portions 9a and 10a. In the present embodiment, the end surface portion 9a of the light guide 9, and an opposing surface portion 13f of the interposing portion 13a on the rear side are disposed substantially in parallel to each other with a clearance. Likewise, the end surface portion 10a of the light guide 10, and an opposing surface portion 13g of the interposing portion 13a on the front side are disposed substantially in parallel to each other with a clearance.

A part of light (L1) output from the second light source portion 8 is guided through the light guide 9 between the light guide 9 and the light guide 10 disposed as described above, and impinges on the end surface portion 9a. Thus, the light L1 is transmitted from the end surface portion 9a to the opposing surface portion 13f. Further, light L2 transmitted through the interposing portion 13a of the outer glass 13 in a thickness direction of the outer glass 13 is transmitted from the opposing surface portion 13g to the end surface portion 10a. Light L3 incident from the end surface portion 10a is output forwardly of the vehicle 1, while being guided through the light guide 10.

Note that, in the illumination device 2, the light guide 12 (a third light guide) and the light guide 11 (a fourth light guide) may be omitted. In this case, the light guide 9 guides all the light output from the second light source portion 8 to the end surface portion 9a.

In the illumination device 2 according to the present embodiment, the wing light emitting portion 4 is constituted by the light guide 10. Therefore, the light guide 10 extending along a front end portion of the signature wing 3 outputs light forwardly of the vehicle 1 on the outside of the housing 18, as the wing light emitting portion 4.

Herein, in the present embodiment, the end surface portion 9a and the end surface portion 10a are formed substantially in parallel to each other. Further, both of the end surface portion 9a and the opposing surface portion 13f are also formed substantially in parallel to each other, and both of the end surface portion 10a and the opposing surface portion 13g are also formed substantially in parallel to each other. Thus, when light is transmitted from the light guide 9 to the light guide 10, light is transmitted with high efficiency, while suppressing diffusion.

5. Configuration of Light Guides 9, 11, and 12

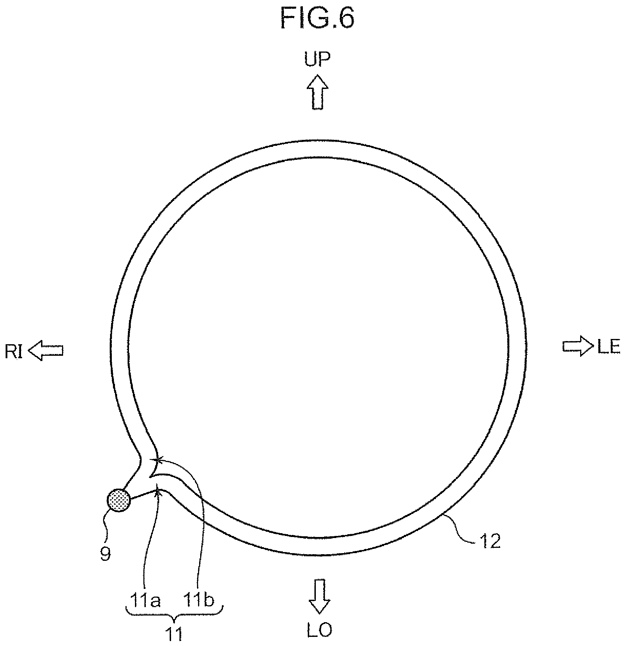

A configuration of the light guides 9, 11, and 12 is described with reference to FIG. 6. FIG. 6 is a schematic front view illustrating a configuration of the light guides 9, 11, and 12.

As illustrated in FIG. 6, the light guide 11 is formed to be branched from (connected to) the light guide 9, which extends forwardly from the rear side of the illumination device 2.

The light guide 11 includes two branch portions 11a and 11b. One of the two branch portions 11a and 11b, namely, the first branch portion 11a is connected in such a way that light is guided to one side (a clockwise side) in a circumferential direction of the annular-shaped light guide 12.

On the other hand, the other of the two branch portions 11a and 11b, namely, the second branch portion 1 1b is connected in such a way that light is guided to the other side (a counterclockwise side) in the circumferential direction of the annular-shaped light guide 12.

Note that, in the illumination device 2, a connecting portion between the light guide 9, and each of the first and second branch portions 11a and 11b, and a connecting portion of each of the first and second branch portions 11a and 11b with respect to the light guide 12 are covered by the distal end portion 3a of the signature wing 3 serving as an exterior member from the front side.

6. Light Emitting Pattern of Annular Light Emitting Portion 6

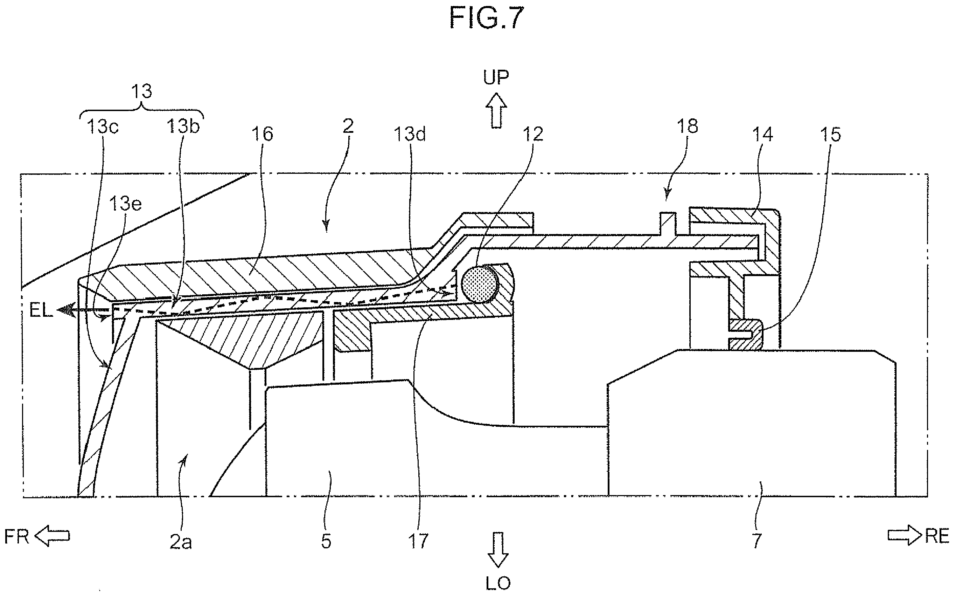

A light emitting pattern of the annular light emitting portion 6 is described with reference to FIG. 7. FIG. 7 is a schematic cross-sectional view illustrating a light path of light output from the light guide 12 forwardly.

As illustrated in FIG. 7, the outer glass 13 includes a perimeter portion 13b and a front surface portion 13c, which are formed integrally with each other. As described above, the light chamber 2a is defined by the outer glass 13, the back surface case 14, and the seal member 15.

In the light chamber 2a, the light guide 12 is disposed in such a way as to surround a periphery of the headlight 5 in a state that the light guide 12 is spaced away from the headlight 5. The light guide 12 is supported by a guide support portion 17, which is formed along an inner portion of the perimeter portion 13b of the outer glass 13.

A part of an outer circumference of the perimeter portion 13b of the outer glass 13 is covered by an outer case 16. The outer circumferential part of the perimeter portion 13b of the outer glass 13, which is covered by the outer case 16, is a portion closer to the front side than a portion where the light guide 12 is disposed inside the light chamber 2a.

Next, light guided through the light guide 12 is output forwardly from the entirety in a circumferential direction of the light guide 12. Light output forwardly from the light guide 12 is guided to an inner portion of the perimeter portion 13b of the outer glass 13 from an incident portion 13d of the outer glass 13, which faces the front side of the light guide 12.

As illustrated by the broken line, on an inner portion of the perimeter portion 13b of the outer glass 13, light is guided forwardly, while repeating reflection on a radially inner peripheral surface and a radially outer peripheral surface of the perimeter portion 13b. Further, the guided light (EL) is output forwardly of the vehicle 1 from an output portion 13e, which is a front end portion of the perimeter portion 13b of the outer glass 13.

As described above, the annular light emitting portion 6 for annularly emitting light in such a way as to surround a periphery of the headlight 5 is configured in the illumination device 2 (see FIG. 3).

7. Configuration of Reflecting Portion 10c of Light Guide 10

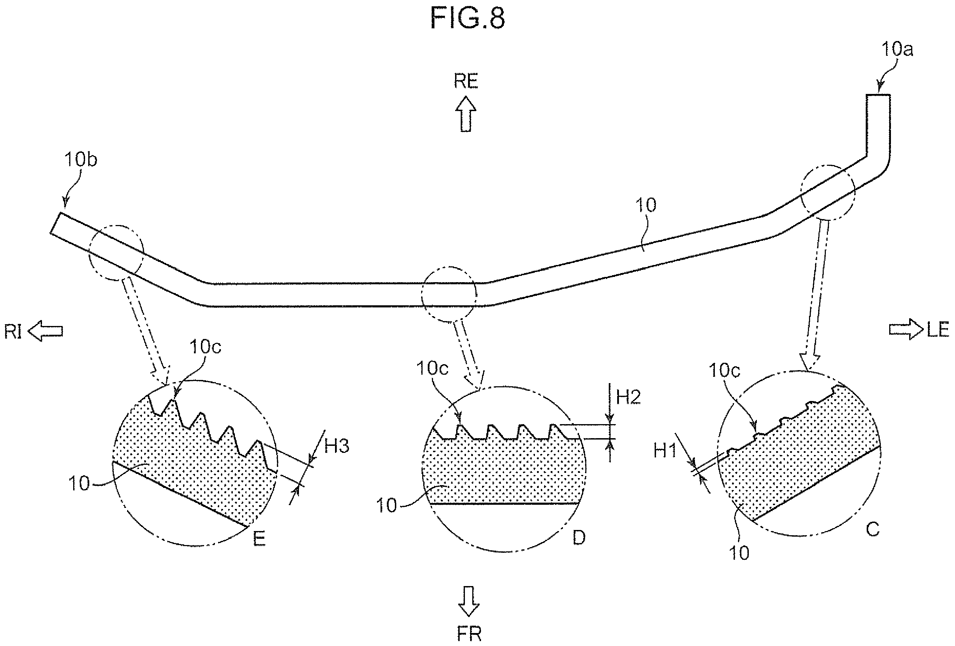

A configuration of a reflecting portion 10c of the light guide 10 is described with reference to FIG. 8. FIG. 8 is a schematic plan view illustrating a configuration of the light guide 10, when viewed from above.

As illustrated in FIG. 8, the light guide 10 in the present embodiment extends in a vehicle width direction (a left-right direction) of the vehicle 1, and as described above, light is incident from the end surface portion 10a.

As enlargedly illustrated by a portion C in FIG. 8, the reflecting portion 10c having a convexo-concave height H1 is formed on the rear side at a position near the end surface portion 10a of the light guide 10.

Next, as enlargedly illustrated by a portion D in FIG. 8, a reflecting portion 10c having a convexo-concave height H2 is formed on the rear side at a middle position in a length direction of the light guide 10.

Further, as enlargedly illustrated by a portion E in FIG. 8, a reflecting portion 10c having a convexo-concave height H3 is formed on the rear side at a position near the other end portion 10b of the light guide 10.

HI, H2, and H3 satisfy the following relationship.

$$H1 < H2 < H3 \qquad \ldots \text{(Expression 1)}$$

Note that, as an example, H2 may be two to three times as high as HI, and H3 may be three to four times as high as H1.

In the light guide 10 in the present embodiment, forming the reflecting portion 10c whose convexo-concave height gradually increases, as the reflecting portion 10c approaches from the end surface portion 10a toward the other end portion 10b enables to substantially uniformly adjust an intensity of light to be output forwardly of the vehicle 1 in a length direction of the light guide 10.

8. Advantageous Effects

In the illumination device 2 according to the present embodiment, the light guide (a second light guide) 10 disposed outside the housing 18 emits light by light output from the second light source portion 8 disposed inside the housing 18. Specifically, in the illumination device 2 according to the present embodiment, since the light guide 10 serving as a light emitting portion is disposed outside the housing 18, as compared with the technique disclosed in Japanese Unexamined Patent Application Publication No. 2018-32512 in which daytime running lights are provided only inside a housing, the illumination device 2 has enhanced design, and is able to secure a high degree of freedom in designing.

Further, in the illumination device 2 according to the present embodiment, since supply of light to the light guide 10 is performed by the second light source portion 8 disposed inside the housing 18, it is possible to suppress moisture and dust from intruding into the second light source portion 8, when the vehicle 1 is traveling or the like.

Furthermore, in the illumination device 2 according to the present embodiment, light is guided from the light guide (a first light guide) 9 disposed inside the housing 18 to the light guide (a second light guide) 10 disposed outside the housing 18 via the interposing portion 13a of the outer glass (a light transmitting portion) 13. Specifically, in the illumination device 2 according to the present embodiment, a hole is not formed in the housing 18 at a position where the end surface portion 9a of the light guide 9 and the end surface portion 10a of the light guide 10 face each other, and intrusion of moisture and dust into the housing 18 is suppressed.

Moreover, in the illumination device 2 according to the present embodiment, since light output from the second light source portion 8 is distributed to the light guide 10 constituting the wing light emitting portion 4, and the light guide 12 constituting the annular light emitting portion 6, as compared with a case where the second light source portion 8 is provided for each of the light guides 10 and 12, it is possible to reduce the weight and the production cost of the vehicle 1.

Also, in the illumination device 2 according to the present embodiment, since the end surface portion 9a of the light guide 9 and the end surface portion 10a of the light guide 10 are disposed to face each other, with the interposing portion 13a of the outer glass 13 being interposed therebetween, and the end surface portion 9a and the end surface portion 10a are substantially in parallel to each other, light output from the end surface portion 9a of the light guide 9 is guided to the light guide 10 in a state that diffusion of light output from the end surface portion 9a of the light guide 9 to the outside (specifically, radially outward diffusion from the end surface portion 9a) is suppressed. Therefore, the illumination device 2 according to the present embodiment is able to guide light from the second light source portion 8 to the light guide 10 with high efficiency.

Further, in the illumination device 2 according to the present embodiment, since the light guide 9 is formed to extend substantially linearly in a front-rear direction, it is possible to minimize attenuation of light, when light is guided through the light guide 9, and it is possible to guide light from the second light source portion 8 to the light guide 10 with high efficiency.

Furthermore, in the illumination device 2 according to the present embodiment, since light output from the second light source portion 8 is allowed to be guided not only to the light guide 10, but also to the light guide (a third light guide) 12, which is disposed inside the housing 18, as compared with the technique disclosed in Japanese Unexamined Patent Application Publication No. 2018-32512 in which a second light source portion is provided for each light guide, the illumination device 2 provides enhanced design, and is able to reduce the weight and the production cost of the vehicle 1.

Moreover, since the illumination device 2 according to the present embodiment includes the light guide (a fourth light guide) 11 for connecting the light guides 9 and 12, it is possible to guide light from the second light source portion 8 to the light guide 12 with high efficiency.

As described above, in the illumination device 2 according to the present embodiment, two light emitting portions (the wing light emitting portion 4 and the annular light emitting portion 6) mounted on the headlight 5 are provided, and the wing light emitting portion 4 as one of the two light emitting portions is disposed outside the housing 18. Therefore, the illumination device 2 is superior in terms of function and design. Further, in the illumination device 2 according to the present embodiment, since the wing light emitting portion 4 and the annular light emitting portion 6 also serve as the second light source portion 8, it is advantageous in reducing the weight and the production cost of the vehicle 1.

[First Modification]

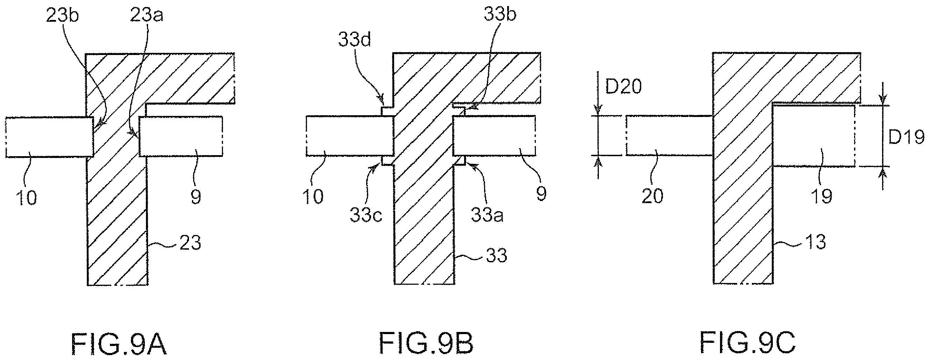

A configuration of an illumination device according to a first modification is described with reference to FIG. 9A. FIG. 9A is a schematic cross-sectional view illustrating a portion (an interposing portion) of an outer glass 23 where a light guide 9 and a light guide 10 face each other among constituent elements of the illumination device according to the present modification.

Note that since the illumination device according to the present modification employs the same configuration as the illumination device 2 according to the embodiment, except for a portion of the outer glass 23 where the light guides 9 and 10 face each other, illustration and description of an overlapping configuration are omitted.

As illustrated in FIG. 9A, in the outer glass 23 according to the present modification, a recess portion 23a and a recess portion 23b are formed in a portion (an interposing portion) of the outer glass 23 where the light guides 9 and 10 face each other. The recess portion 23a is configured to have an inner size slightly larger than a cross-sectional area of the light guide 9. Likewise, the recess portion 23b is configured to have an inner size slightly larger than a cross-sectional area of the light guide 10.

Further, in the present modification, one end portion of the light guide 9 is received in the recess portion 23a, and one end portion of the light guide 10 is received in the recess portion 23b.

In the illumination device according to the present modification, since one end portion of the light guide 9 is received in the recess portion 23a, and one end portion of the light guide 10 is received in the recess portion 23b, it is less likely that positional displacement of the light guides 9 and 10 with respect to the outer glass 23, specifically, positional displacement between the light guides 9 and 10 is less likely to occur. Therefore, in the illumination device according to the present modification, it is possible to achieve high efficiency, when light is transmitted from the light guide 9 to the light guide 10.

[Second Modification]

A configuration of an illumination device according to a second modification is described with reference to FIG. 9B. FIG. 9B is a schematic cross-sectional view illustrating a portion (an interposing portion) of an outer glass 33 where a light guide 9 and a light guide 10 face each other among constituent elements of the illumination device according to the present modification.

Note that since the illumination device according to the present modification also employs the same configuration as the illumination device 2 according to the embodiment, except for a portion of the outer glass 33 where the light guides 9 and 10 face each other, illustration and description of an overlapping configuration are omitted.

As illustrated in FIG. 9B, in the outer glass 33 according to the present modification, projecting portions 33a to 33d, each of which projects in a direction intersecting with a thickness direction of the outer glass 33, is formed on a portion (an interposing portion) of the outer glass 33 where the light guides 9 and 10 face each other. Further, one end portion of the light guide 9 is engaged in between the projecting portions 33a and 33b, and one end portion of the light guide 10 is engaged in between the projecting portions 33c and 33d.

Note that a distance between the projecting portions 33a and 33b is set slightly larger than a size in cross section of the light guide 9 in the direction intersecting with the thickness direction of the outer glass 33, and a distance between the projecting portions 33c and 33d is set slightly larger than a size in cross section of the light guide 10 in the direction intersecting with the thickness direction of the outer glass 33.

In the illumination device according to the present modification, by engagement by the projecting portions 33a to 33d, positional displacement of the light guides 9 and 10 with respect to the outer glass 33, and positional displacement between the light guides 9 and 10 are less likely to occur. Therefore, in the illumination device according to the present modification, it is possible to achieve high efficiency, when light is transmitted from the light guide 9 to the light guide 10.

[Third Modification]

A configuration of an illumination device according to a third modification is described with reference to FIG. 9C. FIG. 9C is a schematic cross-sectional view illustrating a light guide 19 and a light guide 20 among constituent elements of the illumination device according to the present modification.

Note that the light guide 19 in the present modification corresponds to the light guide 9 according to the embodiment, and the light guide 20 corresponds to the light guide 10 according to the embodiment. Further, since the illumination device according to the present modification also employs the same configuration as the configuration of the illumination device 2 according to the embodiment, except for the light guides 19 and 20, illustration and description of an overlapping configuration are omitted.

As illustrated in FIG. 9C, in the illumination device according to the present modification, a cross-sectional area (a diameter D19 of a circular cross section) of the light guide 19 at a position close to a second light source portion 8 on a light transmission path is larger than a cross-sectional area (a diameter D20 of a circular cross section) of the light guide 20, which is disposed downstream on the light transmission path.

Note that a cross-sectional shape of each of the light guides 19 and 20 is not necessarily a circular shape, but may be an oval shape, an elliptical shape, or a polygonal shape.

Further, a cross-sectional area of the light guide 19 is not necessarily larger than that of the light guide 20 in terms of entire area in a length direction. It may be possible to employ a configuration in which a cross-sectional area of the light guide 19 is larger than that of the light guide 20 at least in terms of area in the vicinity of an end surface portion of the light guide 19, which faces the light guide 20 with respect to an outer glass 13.

In the illumination device according to the present modification, since a cross-sectional area of the light guide 19, which is disposed upstream in a light transmitting direction, is set larger than that of the light guide 20, which is disposed downstream in the light transmitting direction, also when the light guides 19 and 20 are disposed with a relative positional displacement to some extent in a cross-sectional direction (a direction intersecting with a thickness direction of an interposing portion of the outer glass 13), light output from the light guide 19 is transmitted to the light guide 20 with high efficiency, while suppressing diffusion to the outside.

[Other Modifications]

In the illumination device according to each of the embodiment and the first to third modifications, two light emitting portions, namely, the annular light emitting portion 6 constituted by the light guide 12 disposed to surround the periphery of the headlight 5, and the wing light emitting portion 4 constituted by the light guide 10 extending linearly and inwardly in a vehicle width direction along a front end portion of the signature wing 3 are employed, as light emitting portions mounted on the headlight 5. The present invention, however, is not limited to the above. For example, it may be possible to employ a configuration in which both of two light emitting portions are light emitting portions extending in a vehicle width direction. Further, it may be possible to employ a configuration in which a plurality of dot-shaped light emitting portions are mounted on a headlight.
Further, as far as at least one light guide is provided outside a housing, a light guide inside a housing may not be necessarily provided.
In the illumination device of each of the embodiment and the first to third modifications, a light source portion constituted by one or more LED elements is employed as the second light source portion 8 including the annular light emitting portion 6 and the wing light emitting portion 4. The present invention, however, is not limited to the above. For example, it may be possible to employ an organic EL element, an inorganic EL element, a semiconductor laser element, or the like, as a second light source portion.
In the illumination device according to each of the embodiment and the first to third modifications, when light is output by driving the second light source portion 8, both of the annular light emitting portion 6 and the wing light emitting portion 4 are caused to emit light. The present invention, however, is not limited to the above. For example, an optical shutter may be provided between a second light source portion and a second light guide, and between the second light source portion and a third light guide, so that a first light emitting portion and a second light emitting portion are selectively caused to emit light.
In the illumination device according to each of the embodiment and the first to third modifications, a light source of the headlight 5 is not specifically mentioned. Various types of light sources, however, may be employed. For example, an LED, an inorganic EL element and an organic EL element, or a semiconductor light emitting element such as a semiconductor laser element may be employed. Further, a halogen lamp, a high intensity discharge lamp, or the like may be employed.
In the illumination device according to each of the embodiment and the first to third modifications, a wavelength of light to be output from the second light source portion 8 is not specifically mentioned. However, it may be configured to output only light of a predetermined wavelength (e.g., a wavelength of light of an orange color). Further, it may be configured to output light having wavelengths different from each other (e.g. a wavelength of light having a white color, and a wavelength of light having an orange color) by adjusting an application voltage or the like.
Further, it may be configured to intermittently output light from a second light source portion 8, or cause a plurality of light emitting portions or a part of light emitting portions to blink light.
The illumination device 2 according to the embodiment employs a configuration in which each of end surface portions of the light guides 9 to 11 is made proximate to a surface of the outer glass 13, as an example. Alternatively, as described in the first to third modifications, it may be possible to employ a configuration in which an end surface portion of a light guide is made contact with a surface of an outer glass.
Conversely, the illumination device according to each of the first to third modifications employs a configuration in which each of end surface portions of the light guides 9 and 10 (19 and 20) is made contact with a surface of the outer glass 13, 23, or 33. Alternatively, as described in the embodiment, it may be possible to employ a configuration in which each end surface portion of a light guide is made proximate to a surface of an outer glass.
A vehicular illumination device described in relation to the embodiment mainly includes the following features.
A vehicular illumination device according to the embodiment is a vehicular illumination device provided on a front portion of a vehicle. The illumination device includes: a housing having a light transmitting portion disposed in a partial area including the front portion of the vehicle and capable of transmitting light from inside of the housing to outside thereof; a headlight accommodated inside the housing, and serving as a first light source portion capable of radiating light forwardly of the vehicle through the light transmitting portion; a second light source portion accommodated inside the housing separately of the headlight; a first light guide disposed inside the housing, and configured to allow incidence of light output from the second light source portion and guide at least a part of the incident light to the light transmitting portion; and a second light guide disposed outside the housing, and configured to allow incidence of the light guided by the first light guide via the light transmitting portion, and output the incident light forwardly of the vehicle, while guiding the incident light.

In the vehicular illumination device according to this aspect, the second light guide disposed outside the housing functions as a light emitting portion by light output from the second light source portion. Therefore, in the vehicular illumination device according to this aspect, unlike the technique disclosed in Japanese Unexamined Patent Application Publication No. 2018-32512 in which a light emitting portion is provided only inside a housing, an illumination device having enhanced design can be implemented, since the second light guide serving as a light emitting portion is disposed outside the housing.

Further, supply of light to the second light guide is performed by the second light source portion disposed inside the housing. Therefore, it is possible to suppress moisture and dust from intruding into the second light source portion, when the vehicle is traveling or the like.

Further, in the vehicular illumination device according to this aspect, light is guided from the first light guide disposed inside the housing to the second light guide disposed outside the housing via the light transmitting portion. Specifically, in the vehicular illumination device according to this aspect, a hole is not formed in the housing at a position where the first light guide and the second light guide face each other, and intrusion of moisture and dust into the housing is suppressed.

In the vehicular illumination device according to this aspect, each of the first light guide and the second light guide may have a rod-like outer shape, and an end surface portion on one end side of the first light guide, and an end surface portion on one end side of the second light guide may be disposed to face each other in a state that the light transmitting portion is interposed between the end surface portions.

In a case where the above-described configuration is employed, since the end surface portion of the first light guide and the end surface portion of the second light guide are disposed to face each other with the light transmitting portion being interposed therebetween, light output from the end surface portion of the first guide is guided to the second light guide in a state that diffusion to the outside (specifically, radially outward diffusion from an end surface portion) is suppressed. Therefore, in a case where the above-described configuration is employed, it is possible to guide light from the second light source portion to the second light guide with high efficiency.

In the vehicular illumination device according to this aspect, the first light guide may be disposed to extend substantially linearly.

In a case where the above-described configuration is employed, it is possible to minimize attenuation of light when light is guided inside the first light guide by disposing the substantially linearly extending first light guide, and it is possible to guide light from the second light source portion to the second light guide with high efficiency.

In the vehicular illumination device according to this aspect, a cross-sectional area of the first light guide may be made larger than a cross-sectional area of the second light guide in terms of at least a predetermined area on the one end side.

In a case where the above-described configuration is employed, since the cross-sectional area of the first light guide disposed upstream in the light transmitting direction is made larger than that of the second light guide disposed downstream, even when the first light guide or the second light guide is disposed with positional displacement to some extent in a cross-sectional direction, light from the first light guide is transmitted to the second light guide with high efficiency.

In the vehicular illumination device according to this aspect, recess portions may be respectively formed in portions of the light transmitting portion which face the end surface portion of the first light guide and the end surface portion of the second light guide respectively, and each of a portion on the one end side of the first light guide, and a portion on the one end side of the second light guide may be received in each of the recess portions.

In a case where the above-described configuration is employed, since a portion on one end side of the first light guide and a portion on one end side of the second light guide are received in the recess portions, positional displacement between the first light guide and the second light guide is less likely to occur. Therefore, in a case where the above-described configuration is employed, high efficiency can be achieved, when light is transmitted from the first light guide to the second light guide.

In the vehicular illumination device according to this aspect, projecting portions projecting in a direction intersecting with a surface of the light transmitting portion may be formed around portions of the light transmitting portion which face the end surface portion of the first light guide and the end surface portion of the second light guide respectively, and a portion on the one end side of the first light guide and a portion on the one end side of the second light guide may be engaged in a direction along the surface by the projecting portions.

In a case where the above-described configuration is employed, since a portion on one end side of the first light guide and a portion on one end side of the second light guide are respectively engaged in the projecting portions of the light transmitting portion, positional displacement between the first light guide and the second light guide is less likely to occur. Therefore, also in a case where the above-described configuration is employed, high efficiency can be achieved, when light is transmitted from the first light guide to the second light guide.

The vehicular illumination device according to this aspect may further include a third light guide disposed inside the housing, and configured to allow incidence of a part of light output from the second light source portion and output the incident light to an outside of the housing, while guiding the incident light.

In a case where the above-described configuration is employed, since light output from the second light source portion is guided not only to the second light source but also to the third light guide, unlike the technique disclosed in Japanese Unexamined Patent Application Publication No. 2018-32512 in which a second light source portion is provided for each light guide, it is possible to reduce the weight and the production cost of the vehicle.

The vehicular illumination device according to this aspect may further include a fourth light guide disposed inside the housing, branched from the first light guide, and configured to guide the part of light to the third light guide.

In a case where the above-described configuration is employed, since the fourth light guide for connecting between the first light guide and the third light guide is provided, it is possible to guide light from the second light source portion to the third light guide with high efficiency.

In the vehicular illumination device according to this aspect, it is possible to protect the second light source portion from moisture and dust, and it is possible to achieve enhanced design, while outputting light on the outside of the housing.

This application is based on Japanese Patent application No. 2018-147455 filed in Japan Patent Office on August 6, 2018, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A vehicular illumination device (2) provided on a front portion of a vehicle (1), comprising:

   a housing (18) including a light transmitting portion (13, 23, 33) disposed in a partial area including the front portion of the vehicle and capable of transmitting light from inside of the housing to outside thereof;
   a headlight (5) accommodated inside the housing (18), and serving as a first light source portion capable of radiating light forwardly of the vehicle (1) through the light transmitting portion (13, 23, 33);
   a second light source portion (8) accommodated inside the housing (18) separately of the headlight (5);
   a first light guide (9, 19) disposed inside the housing (18), and configured to allow incidence of light output from the second light source portion (8) and guide at least a part of the incident light to the light transmitting portion (13, 23, 33); and
   a second light guide (10, 20) disposed outside the housing (18), and configured to allow incidence of the light guided by the first light guide (9, 19) via the light transmitting portion (13, 23, 33), and output the incident light forwardly of the vehicle (1), while guiding the incident light.

2. The vehicular illumination device (2) according to claim 1, wherein
   each of the first light guide (9) and the second light guide (10) has a rod-like outer shape, and
   an end surface portion (9a) on one end side of the first light guide (9), and an end surface portion (10a) on one end side of the second light guide (10) are disposed to face each other in a state that the light transmitting portion (13) is interposed between the end surface portions.

3. The vehicular illumination device (2) according to claim 2, wherein
   the first light guide (9, 19) is disposed to extend substantially linearly.

4. The vehicular illumination device (2) according to claim 2 or 3, wherein
   a cross-sectional area of the first light guide (19) is made larger than a cross-sectional area of the second light guide (20) in terms of at least a predetermined area on the one end side.

5. The vehicular illumination device (2) according to any one of claims 2 to 4, wherein
   recess portions (23a, 23b) are respectively formed in portions of the light transmitting portion (23) which face the end surface portion of the first light guide (9) and the end surface portion of the second light guide (10) respectively, and
   each of a portion on the one end side of the first light guide (9), and a portion on the one end side of the second light guide (10) is received in each of the recess portions (23a, 23b).

**6.** The vehicular illumination device (2) according to any one of claims 2 to 5, wherein
projecting portions (33a, 33b, 33c, 33d) projecting in a direction intersecting with a surface of the light transmitting portion (33) are formed around portions of the light transmitting portion (33) which face the end surface portion of the first light guide (9) and the end surface portion of the second light guide (10) respectively, and
a portion on the one end side of the first light guide (9) and a portion on the one end side of the second light guide (10) are engaged in a direction along the surface by the projecting portion (33a, 33b, 33c, 33d).

**7.** The vehicular illumination device (2) according to any one of claims 1 to 6, further comprising
a third light guide (12) disposed inside the housing (18), and configured to allow incidence of a part of light output from the second light source portion (8) and output the incident light to an outside of the housing (18), while guiding the incident light.

**8.** The vehicular illumination device (2) according to claim 7, further comprising
a fourth light guide (11) disposed inside the housing (18), branched from the first light guide (9), and configured to guide the part of light to the third light guide (12).

FIG.1

FIG.2

# FIG.3

# FIG.4

FR ⇐   ⇒ RE

**FIG.5**

# FIG.6

UP

⇧

RI ⇦

⇨ LE

9

11a  11b

11

LO

⇩

12

# FIG.7

EP 3 608 587 A1

# FIG.8

EP 3 608 587 A1

FIG.9A            FIG.9B            FIG.9C

Europäisches
Patentamt

European
Patent Office

Office européen
des brevets

## EUROPEAN SEARCH REPORT

**Application Number**

EP 19 18 9364

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 091846 A (KOITO MFG CO LTD) 23 May 2016 (2016-05-23) | 1-3 | INV. F21S43/251 |
| Y | * see attached machine translation; paragraphs [0014] - [0026]; figures 1-3 * | 4-8 | F21S43/237 F21S43/27 B60Q1/00 |
| Y | JP 2015 133219 A (KOITO MFG CO LTD) 23 July 2015 (2015-07-23) * see attached machine translation; figures 1,2,5 * | 4 | |
| Y | WO 2014/199108 A1 (AUTOMOTIVE LIGHTING REAR LAMPS FRANCE) 18 December 2014 (2014-12-18) * paragraphs [0039], [0042], [0043]; figures 1,2 * | 5,6 | |
| Y | JP 2014 157692 A (STANLEY ELECTRIC CO LTD) 28 August 2014 (2014-08-28) * see attached machine translation; paragraphs [0012] - [0040]; figures 1,2,3,5 * | 7,8 | |
| X | WO 2012/077379 A1 (TOYOTA AUTO BODY CO LTD [JP]; KARIWA NAOTO [JP]) 14 June 2012 (2012-06-14) * see attached machine translation; paragraphs [0001] - [0023]; figures 1-5 * | 1-3 | TECHNICAL FIELDS SEARCHED (IPC) F21S B60Q |
| X | DE 10 2013 017859 A1 (DAIMLER AG [DE]) 3 July 2014 (2014-07-03) * paragraphs [0009], [0010], [0032] - [0034]; figures 1-3 * | 1 | |
| A | JP 2014 164975 A (STANLEY ELECTRIC CO LTD) 8 September 2014 (2014-09-08) * see attached machine translation; paragraphs [0005] - [0053]; figures 1-3 * | 1,7,8 | |

The present search report has been drawn up for all claims

| Place of search | Date of completion of the search | Examiner |
|---|---|---|
| Munich | 20 September 2019 | Goltes, Matjaz |

## ANNEX TO THE EUROPEAN SEARCH REPORT
## ON EUROPEAN PATENT APPLICATION NO.

EP 19 18 9364

20-09-2019

| Patent document cited in search report | | Publication date | Patent family member(s) | | Publication date |
|---|---|---|---|---|---|
| JP 2016091846 | A | 23-05-2016 | NONE | | |
| JP 2015133219 | A | 23-07-2015 | NONE | | |
| WO 2014199108 | A1 | 18-12-2014 | CN | 105556199 A | 04-05-2016 |
| | | | EP | 3008378 A1 | 20-04-2016 |
| | | | FR | 3007102 A1 | 19-12-2014 |
| | | | JP | 2016524291 A | 12-08-2016 |
| | | | WO | 2014199108 A1 | 18-12-2014 |
| JP 2014157692 | A | 28-08-2014 | JP | 6096528 B2 | 15-03-2017 |
| | | | JP | 2014157692 A | 28-08-2014 |
| WO 2012077379 | A1 | 14-06-2012 | JP | 5526373 B2 | 18-06-2014 |
| | | | JP | 2012123977 A | 28-06-2012 |
| | | | WO | 2012077379 A1 | 14-06-2012 |
| DE 102013017859 | A1 | 03-07-2014 | NONE | | |
| JP 2014164975 | A | 08-09-2014 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018032512 A
- JP 2018147455 A